# EUROPEAN PATENT APPLICATION

(11) **EP 1 085 739 A2**
(43) Date of publication of application: **21.03.2001**
(21) Application number: 00306294.0
(22) Date of filing: 24.07.2000
(51) Int. Cl.: H04M 17/00

(54) **Switch-based intelligent-networked pre-paid telephone calling card service system having bailout to telephone operators**

(30) Priority: 04.08.1999 US 366930
(71) Applicant: LUCENT TECHNOLOGIES INC., Murray Hill, New Jersey 07974-0636 (US)
(72) Inventor: Cai, Yigang, Naperville, Illinois 60565 (US); Hwang, John Tzong-Yang, Naperville, Illinois 60540 (US); Pradeep, Mohanty K., Naperville, Illinois 60540 (US)
(74) Representative: Buckley, Christopher Simon Thirsk

(57) **Abstract**

An improved implementation of pre-paid telephone calling cards uses a switch-based intelligent network (IN) for automated processing of pre-paid calling card account transactions. Calling card account number, corresponding PINs, account status information and others are stored in tables maintained by one or several switches for routing calls, each switch nominally including a Service Switching and Control Point (SSCP), an Originating Call Processor (OCP), and a Terminating Call Processor (TCP). In the preferred embodiment, each switch also contains an Operator Service System (OSS) for allowing a telephone operator to direct call processing either by choice of the customer (direct dial to the operator) or as backup to the automatic processing capability of the SSCP. The system bails out to the OSS when one of the following occurs: the customer demands a bailout; the customer fails to enter any information when prompted; the customer enters incorrect or invalid information more than a predetermined number of times; and the pre-paid calling card account balance is insufficient for the customer's proposed telephone call.

## Description

### Field Of The Invention

The present invention generally relates to improvements in pre-paid telephone calling card (PPCC) service.

### Background

Telephone calling cards are used as convenient media for storing information representative of telephone service subscriber accounts. Calling cards can be as simple as plastic card stock with a card number and a service access telephone number listed thereon, or as complicated as a "smart card" containing electronic circuitry therein. Other versions include calling cards with magnetic strips for storing card numbers and perhaps a personal identification number (PIN) for security purposes.

Telephone calling cards are broadly classified as either "post-paid," in which a customer maintains an account and periodically pays in arrears for charges to the account, and "pre-paid," in which a customer purchases a card evidencing an account providing a fixed monetary value or a fix amount of time of telephone service. The demand for pre-paid telephone calling card service continues to grow, and shows no signs of abatement.

Intelligent Networks (INs) are software and hardware hybrids which can be used to automatically process telephone calls in a telephone system. Besides routinely routing calls from a calling party to a called party/destination number, an IN may also be adapted to handle various pre-paid and post-paid calling card transactions, as well as non-calling card transactions.

A service control point (SCP) in the IN provides the logic that governs call-handling, etc., and contains a database that stores useful information needed for various transactions. The IN also contains one or several switches for both receiving calls to the network and physically routing calls to destination numbers. Each switch contains a Service Switching Point (SSP) for interfacing with calling parties and performing the actual call routing under the instruction of the SCP. The SCP and SSP may be connected with a high-speed link utilizing, for example, the Intelligent Network Application Protocol (INAP), as approved by the European Telecommunications Standards Institute (ETSI) and International Telecommunication Unit (ITU).

The above-described IN is network-based, and has been used for both pre-paid and post-paid calling card service systems. Unfortunately, the power and precision of INs has not been used by service providers for calling card systems due to heavy capital investment requirements needed for creating and maintaining a centralized SCP-based network. In a significant departure from the teachings of the prior art, pre-paid calling card systems could be implemented using a switch-based intelligent network.

For switch-based systems, the call control logic and the PPCC database either resides in a switch or is hardwired to the switch. Currently, most of deployed switch-based PPCC systems are adjuncts attached to the switch. The adjuncts are the cheapest solution to the service providers. They contain both service logic and a database. However, the major disadvantage of adjuncts is that every pre-paid call needs to be transmitted through trunks in the switch, which causes bottlenecking in the switch. The adjunct solution also adds extra hardware to the system.

While a switch-based, intelligent-networked pre-paid calling card system would provide automaticity and speed, it would not have the flexibility of allowing human intervention to prevent loss of revenue and customer frustration, where the intelligent network is unable to process the call.

### Summary Of The Invention

Therefore, to address the limitations of a newly proposed switch-based intelligent-networked pre-paid calling card system, the present invention provides a telecommunications system for processing pre-paid telephone calling card account telephone calls. The system has a plurality of telephone lines for handling telephone calls, and a plurality of switches, each switch operatively coupled to origination telephone lines, and adapted to route authorized calls to a destination number specified by a customer.

Each switch at least includes a Service Switching and Control Point (SSCP) adapted to authorize and direct the routing of telephone calls, the SSCP storing account information for each calling card account supported by the switch. Each switch is accessible by a call originating customer upon the system receiving a customer-generated Service Access Code (SAC).

The system also includes an Operator Service System (OSS) coupled to the SSCP adapted to allow a telephone operator to process pre-paid calling card account transactions upon demand by a customer, or upon bailout at the occurrence of a predefined contingent event.

The present invention also provides in a telecommunications system, a method for processing pre-paid telephone calling card account telephone calls. The method provides a plurality of telephone lines for handling telephone calls, and provides a plurality of switches, each switch operatively coupled to origination telephone lines, and routing authorized calls to a destination number specified by a customer.

The method also provides in each switch, a Service Switching and Control Point (SSCP), authorizes and directs the routing of telephone calls via the SSCP, and stores account information for each calling card account supported by the switch via said SSCP, and provides access to a call originating customer upon the system receiving a customer-generated Service Access Code (SAC). The method also includes, via an Operator Service System (OSS) coupled to the SSCP, allowing a telephone operator to process pre-paid calling card account transactions upon demand by a customer, or upon bailout at the occurrence of a predefined contingent event.

### Brief Description Of The Drawing Figures

Features and advantages of the present invention will become apparent to those skilled in the art from the description below, with reference to the following drawing figures, in which:
Figure 1 is a schematic block diagram of the basic hardware for the present-inventive telecommunications system adapted for pre-paid calling card telephone call processing; and
Figure 2 is a flowchart describing the call flow for the Operator Service System bailout operations of the present invention.

### Description Of The Preferred Embodiments

### 1. Basic Hardware and Description

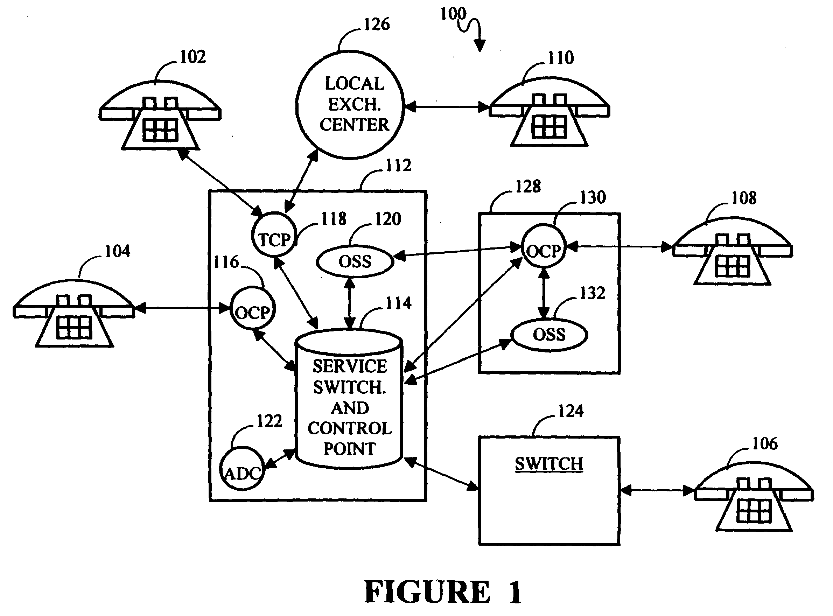

The basic hardware of the telephone service system 100 is illustrated in Figure 1.

The system 100 has several switches such as the ones 112, 124 and 128 forming a switched-based intelligent network (IN). At least one of the switches contains a Service Switching and Control Point (SSCP) 114. The SSCP contains call flow logic and stores information in a calling card table for a number of pre-paid calling accounts. The system 100 also includes telephone lines for handling origination and destination telephone calls via telephonic devices, 102, 104, 106, 108, and 110, etc. Some of the telephonic devices are directly connected via telephone lines to a switch, while others are connected through a local exchange center such as the one 126 shown in the figure.

To complete a transaction a pre-paid calling card (PPCC) customer can dial directly to a switch 112 by dialing a Service Access Code (SAC) unique to the switch. The SAC is followed by a PPCC/PIN and a desired destination telephone number. An Originating Call Processor (OCP) 116 (or 130 in the case of the switch 128) within the switch 112 transfers the call to the SSCP. An Announce and Digit Collection (ADC) unit 122, announces transaction instructions to a customer, and prompts the customer for information such as PPCC/PIN, destination number, and other information such as would be required to change the PIN, or change the activation status of the card.

A Terminating Call Processor (TCP) 116 handles the termination of call processing once a call has been connected to the destination number.

Each switch can also include an Operator Service System (OSS), such as the ones 120 and 132 shown in the figure. The OSS is an interface allowing a transaction to be processed by a telephone operator, either by the choice of a customer, or when the service logic of the SSCP bails out from a current transaction to the OSS. Bailout can occur for such reasons as failure of the PPCC customer to enter information within a predetermined time period, apparent inaction by the customer, or entry of a PIN that does not match the PIN stored in a PPCC table.

In operation, once the OCP receives a telephone call, it performs digits analysis on the digits received from the customer and sends an InitialDP operation to the SSCP.

The SSCP determines whether the information gleaned from the digits received from the customer includes a matching PIN. The customer is prompted to enter information by the ADC unit 122, as previously stated. If the PIN matches, the operation continues. If not, the customer is re-prompted for a new PIN a predetermined number of times (e.g., 3). Upon the failure of entering a PIN matching the one listed in the PPCC Table for the calling card number, the system 100 bails out to an operator via the OSS 120 for further processing of the call.

If the PIN matches and there are no calling card status indicator impediments to the transaction (i.e., the card is valid, activated and unexpired) the SSCP sends a ConnectToResource operation to the TCP. The ConnectToResource operation includes the routing address of the destination number.

### 2. Operator Bailout Call Flow

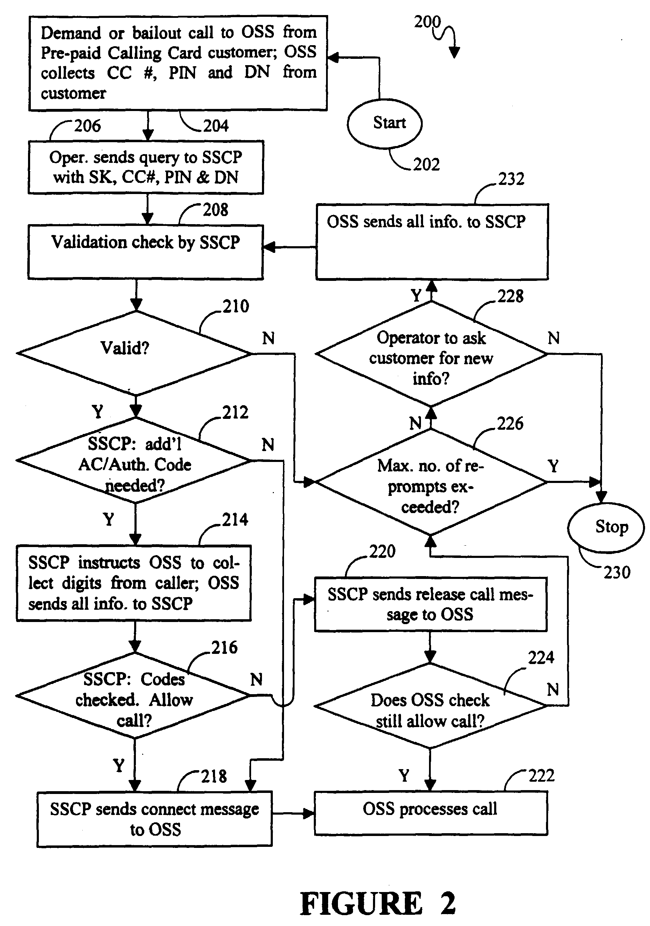

Figure 2 shows an example of a call flow 200 for the handling of a telephone call placed under the control of the OSS. A call flow is an algorithm governing the processing of a telephone call.

After the start (202) of the algorithm 200, the system either receives a demand for transfer to a telephone operator (by pressing "0" anytime during the announcement of a menu, for example), or the intelligent network bails out to the OSS when certain conditions are met (e.g., customer inactivity, invalid information, insufficient credit units to place the contemplated call) at Step 204. In Step 206, an operator sends a query message to the SSCP containing a service key (SK), the calling card number (CC#), a PIN, and a destination number (DN).

The SSCP compares the received information with the appropriate information in the PPCC Table for validation purposes (Steps 208 and 210). If the calling card number and PIN match those in the PPCC Table the algorithm advances to Step 212. If additional information is needed (Steps 212 and 214), the SSCP instructs the OSS to collect additional digits from the operator. The operator then sends all of the newly collected information to the SSCP. If the new information is valid (Step 216), the SSCP sends a connect message to the OSS (Step 218), whereupon the OSS processes the call (Step 222), where the operator (via the OSS) processes the call and the switch routes it to the destination number.

If the information collected and compared in Step 210 is not valid, the algorithm determines whether a predefined maximum number of iterations/re-prompts has been exceeded (Step 226). If the maximum has been exceeded the algorithm stops (Step 230) and call processing ceases.

If the information collected and compared in Step 216 is not valid, the SSCP sends a release message to the OSS in Step 220. If a check by the operator nonetheless determines the call should be allowed, the OSS processes the call (Steps 224 and 222). If the aforementioned check determines that the call should not be allowed, the algorithm determines whether a predefined maximum number of iterations/re-prompts has been exceeded (Step 226). If the maximum has been exceeded the algorithm stops (Step 230) and call processing ceases.

If the predefined maximum has not been exceeded, the operator asks the customer for a new information (Step 232). The new information is sent to the SSCP for processing in Step 232.

As was previously mentioned, the customer can reach the OSS and a telephone operator in three ways. First, the customer can dial the operator directly, and then request the processing of a pre-paid calling card transaction. Second, the customer can demand a connection to the OSS (and hence an operator) at any time during the announcement of menus while he/she is connected to a switch 112, 124, 130. Third, the customer is automatically transferred to an OSS ("bailout") upon the occurrence of pre-defined events during transaction processing. The predefined events include inactivity or non-response of the customer for a predetermined time period (i.e., the customer has been prompted to input information but has not done so in a timely fashion), failure to input the correct security/access code or PIN within a satisfactory (predetermined) number of attempts, and attempting to place a call that cannot be supported by the pre-paid calling card account (e.g., the customer attempts to place a long distance call to a destination number whereby the first minute will exceed all of the credit units available in the account).

Variations and modifications of the present invention are possible, given the above description. However, all variations and modifications which are obvious to those skilled in the art to which the present invention pertains are considered to be within the scope of the protection granted by this Letters Patent.

## Claims

1. A telecommunications system for processing pre-paid telephone calling card account telephone calls comprising:
a plurality of telephone lines for handling telephone calls;
a plurality of switches, each switch operatively coupled to origination telephone lines, adapted to route authorized calls to a destination number specified by a customer;
wherein each switch comprises a Service Switching and Control Point (SSCP) adapted to authorize and direct the routing of telephone calls, said SSCP storing account information for each calling card account supported by said switch;
wherein each switch is accessible by a call originating customer upon the system receiving a customer-generated Service Access Code (SAC); and
an Operator Service System (OSS) coupled to said SSCP adapted to allow a telephone operator to process pre-paid calling card account transactions upon demand by a customer, or upon bailout at the occurrence of a predefined contingent event.

2. The system in Claim 1 further comprising an Announcement and Digit Collection (ADC) unit coupled to said SSCP for prompting said customer to transmit information.

3. The system in Claim 1 wherein said predefined contingent event comprises the failure of a customer, when prompted, to cause information to be transmitted.

4. The system in Claim 1 wherein said predefined contingent event comprises the transmission of invalid account information.

5. The system in Claim 1 wherein said predefined contingent event comprises the transmission of an invalid security code.

6. The system in Claim 1 wherein said predefined contingent event comprises the transmission of invalid account information more than a predetermined number of times.

7. The system in Claim 1 wherein said predefined contingent event comprises the transmission of an invalid security code more than a predetermined number of times.

8. The system in Claim 1 wherein said predefined contingent event comprises an insufficient pre-paid calling card account balance for a contemplated telephone call.

9. In a telecommunications system, a method for processing pre-paid telephone calling card account telephone calls comprising the steps of:
providing a plurality of telephone lines for handling telephone calls;
providing a plurality of switches, each switch operatively coupled to origination telephone lines, and routing authorized calls to a destination number specified by a customer;
providing in each switch, a Service Switching and Control Point (SSCP), authorizing and directing the routing of telephone calls via said SSCP, and storing account information for each calling card account supported by said switch via said SSCP;
providing access to a call originating customer upon the system receiving a customer-generated Service Access Code (SAC); and
via an Operator Service System (OSS) coupled to said SSCP, allowing a telephone operator to process pre-paid calling card account transactions upon demand by a customer, or upon bailout at the occurrence of a predefined contingent event.

10. The method in Claim 9 further comprising the step of, via an Announcement and Digit Collection (ADC) unit coupled to said SSCP, prompting said customer to transmit information.

11. The method in Claim 9 wherein said predefined contingent event comprises the failure of a customer, when prompted, to cause information to be transmitted.

12. The method in Claim 9 wherein said predefined contingent event comprises the transmission of invalid account information.

13. The method in Claim 9 wherein said predefined contingent event comprises the transmission of an invalid security code.

14. The method in Claim 9 wherein said predefined contingent event comprises the transmission of invalid account information more than a predetermined number of times.

15. The method in Claim 9 wherein said predefined contingent event comprises the transmission of an invalid security code more than a predetermined number of times.

16. The method in Claim 9 wherein said predefined contingent event comprises an insufficient pre-paid calling card account balance for a contemplated telephone call.
